# FASCICULE DE BREVET EUROPEEN

(11) **EP 0 499 542 B1**
(45) Date de publication et mention de la délivrance du brevet: **22.05.1996**
(21) Numéro de dépôt: 92400385.8
(22) Date de dépôt: 13.02.1992
(51) Int. Cl.: C08F 267/10, C08F 222/40

(54) **Procédé de durcissement sous rayonnement ionisant d'une résine bis-maléimide et d'un matériau composite utilisant cette résine**
Verfahren für die Härtung mit ionisierende Strahlen eines Maleimidharz und Verbundstoffe aus diesem Harz
Process for the curing with ionizing rays of a bismaleinimide resin and a composite material from this resin

(30) Priorité: 15.02.1991 FR 9101835
(43) Date de publication de la demande: 19.08.1992
(73) Titulaire: AEROSPATIALE Société Nationale Industrielle, F-75781 Paris Cédex 16 (FR)
(72) Inventeur: Beziers, Daniel, F-33160 St Medard en Jalles (FR); Camberlin, Yves, F-69300 Caluire (FR); Chataignier, Evelyne, F-33160 St Medard en Jalles (FR); Dourthe, Pascal, F-40370 Rion-des-Landes (FR)
(74) Mandataire: Lhoste, Catherine

(56) Documents cités:
- EP-A- 0 206 383
- FR-A- 2 427 346

## Description

La présente invention a pour objet un procédé de durcissement sous un rayonnement ionisant d'une résine bis-maléïmide. Ce procédé est utilisable en particulier pour la réalisation de pièces en matériau composite durcissable sous rayonnement ionisant, devant résister à des températures élevées.

Les matériaux composites auxquels s'applique l'invention sont des matériaux constitués d'une résine et d'éléments non miscibles destinés à leur conférer des propriétés particulières. Ces matériaux sont notamment constitués d'un renfort fibreux, minéral ou organique, assurant la résistance et la rigidité des pièces, et d'une matrice organique assurant la liaison entre les fibres de renfort ainsi que le transfert des efforts entre lesdites fibres. Les fibres sont en général en verre, silice, carbone, carbure ou carbonitrure de silicium, alumine, aramide.

Ces matériaux composites peuvent être utilisés dans de nombreux secteurs industriels et notamment dans les domaines spatial, aéronautique, automobile, nautique et dans le domaine des sports de compétition. De façon générale, ces matériaux composites peuvent être utilisés pour la réalisation de pièces mécaniques légères de haute tenue mécanique.

Les matrices organiques utilisées pour la fabrication de matériaux composites sont généralement constituées d'une résine thermodurcissable, durcie sous de fortes pressions et de hautes températures nécessitant l'emploi d'un autoclave. (Le durcissement d'une résine correspond à sa polymérisation et/ou sa réticulation).

Les procédés de durcissement à chaud d'une résine donnent des matériaux composites très performants d'un point de vue mécanique, mais qui présentent des défauts dus aux effets thermiques tels que des contraintes internes, critiques et des délaminages dans le cas de pièces mécaniques épaisses. De plus, le temps de polymérisation est extrêmement long entraînant de lourdes conséquences financières du point de vue investissement et consommation d'énergie.

Les procédés de durcissement par rayonnement tels que X, gamma, ultraviolet et électron permettent une polymérisation et/ou réticulation sans élévation de température. Ils permettent l'obtention de matériaux composites de très bonne qualité en un temps relativement court et en utilisant des énergies relativement faibles. Par ailleurs, ces procédés de durcissement à froid sont compatibles avec tous les types de fibres entrant dans la composition des matériaux composites.

Un procédé de durcissement de résine par rayonnement ionisant pour la fabrication de pièces en matériau composite est en particulier décrit dans le document FR-A-2 564 029. Ces résines sont des thermodurcissables à terminaison acrylique.

Si l'on soumet une résine thermodurcissable à une température supérieure à sa température de transition vitreuse, cette résine perd définitivement toutes ses propriétés mécaniques. Aussi, les résines thermodurcissables ne peuvent être utilisées que pour des températures inférieures à leur température de transition vitreuse.

Les résines polymérisables sous rayonnement ionisant couramment utilisées dans les matériaux composites sont les résines à terminaison acrylique et plus particulièrement les résines époxy à terminaison acrylique.

Or, les résines époxy connues les plus performantes d'un point de vue mécanique et thermique présentent des températures de transition vitreuse de l'ordre de 200°C ; leur utilisation est donc limitée à des applications basses températures et en particulier inférieures à 180°C.

Les résines thermodurcissables du type bis-maléïmide présentent l'avantage, par rapport aux résines époxy, d'une température de transition vitreuse élevée de l'ordre de 300°C permettant leur utilisation dans des applications hautes températures (supérieures à 250°C).

Malheureusement, les compositions à base de bis-maléïmide actuellement connues ne peuvent être durcies que par voie thermique ; elles présentent donc les inconvénients de cette technique de durcissement. De plus, ces résines présentent une viscosité importante (elles sont solides à température ambiante), ce qui exige des mises en oeuvre appropriées. En particulier, la réalisation d'un matériau composite à renfort fibreux nécessite une température d'imprégnation du renfort à des températures de l'ordre de 100°C, compliquant cette étape d'imprégnation et augmentant ainsi son coût. En outre, la durée pendant laquelle ces compositions sont manipulables est insuffisante pour la réalisation de pièces en matériau composite notamment selon la technique de bobinage filamentaire.

L'objectif de l'invention est la réalisation de matériaux composites à matrice à base de résine bis-maléïmide, polymérisés à froid sous un rayonnement ionisant et utilisables dans des applications exigeant des propriétés thermiques et mécaniques élevées.

Aussi, l'invention a pour objet un procédé de durcissement sous rayonnement ionisant d'une résine du type bis-maléïmide ainsi que d'un matériau composite utilisant cette résine permettant notamment de remédier aux inconvénients ci-dessus.

De façon plus précise, l'invention a pour objet un procédé de durcissement sous rayonnement ionisant d'une résine maléïque de base A comportant au moins un monomère bis-maléïmide (a), consistant à ajouter à la résine de base A, avant son utilisation, au moins un diluant reactif B consistant en un monomère à terminaison vinylique copolymérisable avec la résine de base A lorsqu'on soumet un mélange de la résine de base A et du diluant B à un rayonnement ionisant, la quantite totale de diluant B étant telle que les fonctions maléïmides de la résine de base A sont consommées après l'action du rayonnement ionisant et étant choisie dans la gamme de 10 à 50 parties en poids pour 100 parties en poids de la résine de base A, puis à soumettre le mélange à un rayonnement ionisant.

L'action d'un rayonnement ionisant sera appelée ultérieurement "irradiation".

Selon l'invention, on entend par "rayonnement ionisant" un rayonnement électronique ou X, gamma, bêta, visible ou ultraviolet et par "durcissement" une polymérisation et/ou une réticulation.

Le ou les diluants réactifs B de l'invention permettent, après irradiation, l'obtention de degrés de réticulation du bis-maléïmide supérieurs à 95%.

De façon générale le ou les diluants réactifs B comportent chacun une channe carbonée principale de 1 à 20 atomes de carbone et de préférence de 1 à 10 atomes de carbone.

Comme diluant réactif B on peut utiliser des monomères acrylates du type triméthylol propane triacrylate (TMPTA) de formule :

CH₃-CH₂-C-(CH₂-O-CO-CH=CH₂)₃,

le triméthylol propane triméthacrylate (TMPTM) de formule :

CH₃-CH₂-C-(CH₂-O-CO-CCH₃=CH₂)₃,

le triallylcyanurate de formule :

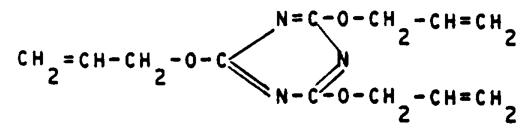

On peut aussi utiliser du styrène et des alkylstyrènes dont les radicaux alkyles comportent chacun de 1 à 5 atomes de carbone, tels que le 2-méthylstyréne, le 3,4-méthylstyrène ou encore le divinylbenzène (DVB). On peut aussi utiliser les N-vinylpyrrolidones, la N-vinylpyrrolidone-2 (NVP), le butylvinyléther (BVE), les vinylanisoles tels que le 4-vinylanisole, et les vinylpyridines telles que la 4-vinylpyridine, etc. et leurs mélanges.

Ces diluants réactifs B peuvent être utilisés seuls ou combinés selon les conditions de mise en oeuvre recherchées et en particulier selon la viscosité recherchée.

Le choix du ou des diluants réactifs B dépend essentiellement de l'application envisagée ainsi que de la durée de vie en pot (pot life en terminologie anglo-saxonne) du mélange résine de base A-diluant réactif B, recherchée pour sa mise en oeuvre.

La durée de vie en pot est le temps pendant lequel la viscosité recherchée pour la mise en oeuvre du mélange résine A-diluant B ne bouge pas ou pratiquement pas. Par exemple pour l'imprégnation d'un tissu, la viscosité du mélange résine A-diluant B pendant l'imprégnation doit rester dans la gamme de 0,5 à 1 Pa.s. De même, pour la fabrication d'une pièce par injection de résine, ce mélange doit présenter une viscosité très faible de l'ordre de 0,5 Pa.s.

Selon l'application envisagée, le temps pendant lequel la viscosité du mélange résine A-diluant B doit rester pratiquement constante est avantageusement compris entre 1 et 20 heures.

Des formulations polymérisables sous rayonnement ionisant à base de DVB ou de styrène sont beaucoup plus réactives que les autres formulations mais leur durée de vie est courte et nécessite une mise en oeuvre rapide. En revanche, leur température de transition vitreuse est très élevée.

La NVP présente le meilleur compromis entre l'exigence de mise en oeuvre et la durée de vie en pot du mélange résine A-diluant B d'une part et de la température de transition vitreuse d'autre part.

Une formulation ne contenant que la résine maléique de base A ne présente pas de propriété thermique suffisante, après irradiation sous rayonnement ionisant, puisque sa température de transition vitreuse est inférieure à 100°C. En mélangeant selon l'invention la résine maléïque de base A avec le ou les diluants réactifs B, les températures de transitions vitreuses pour les mêmes résines de base A peuvent évoluer de 250 à 360°C, après irradiation.

La quantité optimisée de diluant réactif B est déterminée par analyse physicochimique et est obtenue quand, après irradiation, les fonctions maleïmides sont complètement consommées et qu'il n'y a pas de fonction vinylique en excès. Aussi, pour obtenir un taux de réticulation élevé du bis-maléïmide, la quantité de diluant est choisie dans la gamme de 10 à 50 parties en poids et avantageusement dans la gamme de 20 à 40 parties en poids et mieux encore de 30 à 40 parties en poids, pour 100 parties en poids de résine de base A.

En vue de favoriser le mélange de la résine de base A et du diluant réactif B, il peut être avantageux de fondre la résine de base A et de l'ajouter, sous agitation lente, au diluant réactif B chauffé.

Selon les caractéristiques mécaniques souhaitées pour le matériau composite, et selon le procédé de mise en oeuvre utilisé pour la fabrication de ces matériaux composites, on peut adapter la composition de la résine de base A.

Ainsi, la résine de base A peut contenir soit un ou plusieurs monomères bis-maléïmides (a), soit un ou plusieurs bis-maléïmides (a) mélangés avec un ou plusieurs maleïmides (b) particuliers permettant la formation d'un eutectique, additionnés éventuellement d'un acrylate (c) et éventuellement d'un stabilisant (d) permettant d'avancer la réaction chimique entre le ou les bis-maléïmides (a) et le ou les maléïmides (b) de manière à éviter une recristallisation, soit un ou plusieurs monomères bis-maléïmides (a) mélangés à un allylphényle (e), soit encore un ou plusieurs bis-maléïmides (a) mélangés à un polythiol (f) et à un polyacrylate (g) (voir le document JP-A-57 108 159).

Les bis-maléïmides (a) auxquels s'applique l'invention sont en particulier des N,N′-bis-maléïmides présentant le formule (I) : 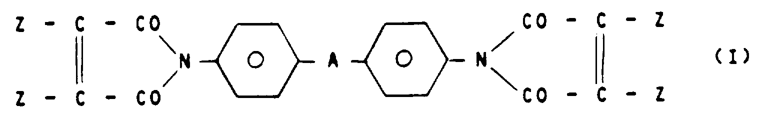 dans laquelle :
- les symboles Z, identiques ou différents, représentent chacun H, CH₃ ou Cl ;
- le symbole A représente un lien valentiel simple ou un groupement :

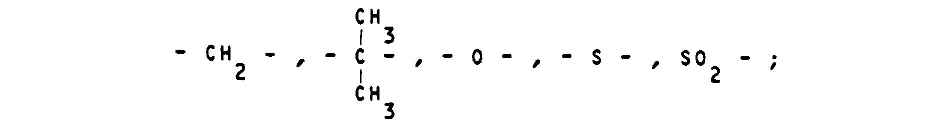

A titre d'exemple spécifique de bis-maléïmides (a) de formule (I) on peut citer :
- le N,N'-4,4'-diphénylméthane-bis-maléïmide,
- le N,N'-4,4'-diphényléther-bis-maléïmide,
- le N,N'-4,4'-diphényl-2,2-propane-bis-maléïmide,
- le N,N'-4,4'-diphénylsulfure-bis-maléïmide,
- le N,N'-4,4'-diphénylsulfone-bis-maléïmide.

Il est toutefois possible d'utiliser d'autres bis-maléïmides tels que le N,N'-hexaméthylène-bis-maléïmide, le N,N'-phénylène-bis-maléïmide, le N,N'-4,4'-diphényl-1,1-cyclohexane-bis-maléïmide, le N,N'-4,4'-diphénylméthane-bis-chloromaléïmide.

Comme allylphényle (e) utilisable en association avec le bis-maléïmide (a) décrit précédemment, on peut citer des allylphényle comportant 1 à 4 noyaux phényle dont la chaîne principale peut comporter de 8 à 30 atomes de carbone. Par exemple, on peut utiliser le o,o-diallylbisphénol A dont la formule (b') est donnée dans l'annexe I ou encore le 1,3-bis(o-allylphénoxy) benzène de formule (b˝) donnée dans l'annexe I.

Le maléïmide (b) éventuellement associé au bis-maléïmide (a) en vue d'abaisser sa température de fusion est choisi parmi les composés de formule (1) à (11) donnés en annexes II et III.

Les bis-maléïmides (a) et maléïmides (b) ci-dessus sont préparés selon les procédés décrits notamment dans le brevet américain US-A-3 018 290 et le brevet anglais GB-A-1 137 290.

Le stabilisant (d) ajouté éventuellement au mélange (a+b) bis-maléïmide/maléïmide en vue d'éviter leur recristallisation est un composé choisi parmi les vinylpyridines, la N-vinylpyrrolidone-2, le vinyltétrahydrofuranne, le styrène et leurs mélanges.

Le réactif acrylate (c) éventuellement mélangé aux bis-maléïmide (a) et maléïmide (b) ci-dessus consiste en un ou plusieurs composés de formule générale :

(CH₂=CR₁-CO-O)̵ₙG (II)

dans laquelle :
- le symbole R₁ représente un atome d'hydrogène ou un radical méthyle,
- n représente un nombre entier ou fractionnaire au moins égal à 1 et au plus égal à 8,
- le symbole G représente un radical organique de valence n dérivé : d'un reste aliphatique saturé, linéaire ou ramifié ayant de 1 à 30 atomes de carbone et pouvant renfermer un ou plusieurs ponts oxygène et/ou une ou plusieurs fonctions hydroxyle libres ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa structure un ou plusieurs ponts oxygène et/ou une ou plusieurs fonctions hydroxyle libres, le ou les valences libres du radical G aromatique pouvant être portées par un atome de carbone d'une chaîne aliphatique et/ou par un atome de carbone d'un noyau benzénique.

Lorsque la résine maléïque de base A contient un bis-maléïmide (a) et un maléïmide (b), le bis-maléïmide (a) représente de 50 à 90% et de préférence de 60 à 80% en poids de ce mélange binaire et le maléïmide (b) représente de 50 à 10% et de préférence de 40 à 20% en poids de ce mélange binaire.

Lorsque l'on utilise un acrylate supplémentaire (c) à ce mélange binaire, on l'utilise en quantité représentant de 5 à 50% et de préférence de 10 à 30% en poids de l'ensemble du mélange (a)+(b)+(c)+(d).

Pour le stabilisant supplémentaire (d), on l'utilise en quantité représentant de 0 à 10% et de préférence de 2 à 8% en poids de l'ensemble du mélange (a)+(b)+(c)+(d).

La résine de base A contenant un bis-maléïmide (a), au moins un maléïmide (b), un acrylate (c) et un stabilisant (d) peut être obtenue comme décrit ci-après.

On réalise tout d'abord un mélange intime du bis-maléïmide (a) avec le ou les maléïmides (b), en opérant sous agitation et à une température au plus égale à la température de fusion du maléïmide le plus difficile à liquéfier et généralement comprise entre 50°C et 250°C et de préférence entre 80°C et 180°C, jusqu'à l'obtention d'un milieu liquide homogène (étape 1).

Puis on ajoute le stabilisant (d) dans le mélange fondu qui est agité et maintenu à une température identique ou différente de celle mise en oeuvre dans l'étape précédente, comprise également entre 50°C et 250°C et, de préférence, entre 80°C et 180°C, et on a soin de laisser ensuite le milieu réactionnel réagir sous agitation pendant une durée allant par exemple de 2 minutes à 15 minutes avant de procéder à l'introduction du réactif acrylate (c) (étape 2).

Enfin, on ajoute le réactif acrylate (c), puis on laisse à nouveau le milieu réactionel réagir sous agitation pendant une durée allant par exemple de 2 minutes à 15 minutes, et on coule ensuite immédiatement le prépolymère formé A à l'extérieur du réacteur ayant servi à le préparer (étape 3). Ce prépolymère est alors stocke jusqu'à son utilisation pour former une résine selon l'invention.

La viscosité à l'état fondu des prépolymères ainsi obtenus peut être aisément ajustée à la valeur souhaitée, comprise entre 0,1 Pa.s et 50 Pa.s, en jouant notamment sur la nature et les proportions respectives des composés mis en oeuvre ainsi que sur la température et la durée des différentes étapes du procédé de fabrication dont on vient de parler.

Selon l'invention, le diluant réactif B et le stabilisant (d) peuvent être identiques ou différents. Lorsqu'ils sont identiques, on peut les ajouter simultanément au cours de l'étape 2. Dans ce cas, le mélange obtenu après l'addition du réactif acrylate (c) est tout de suite prêt à être mis en oeuvre et à être durci sous rayonnement ionisant.

Le procédé de l'invention présente un intérêt particulier pour la réalisation de matériaux composites notamment à renfort fibreux, à tenue thermique élevée.

En particulier, le procédé de l'invention peut être utilisé pour la fabrication de pièces en matériau composite selon différents procédés connus tels que la coulée, le bobinage filamentaire, le drapage uni- ou multidirectionnel, la pré-imprégnation, l'injection, etc.

Aussi, l'invention a encore pour objet un procédé de fabrication d'un matériau composite à renfort fibreux noyé dans une matrice organique, consistant à :
- ajouter à une résine maléique de base A comportant au moins un monomère bis-maléïmide (a), avant son utilisation, au moins un diluant réactif B consistant en un monomère à terminaison vinylique copolymérisable avec la résine de base A lorsqu'on soumet un mélange de la résine de base A et du diluant B à un rayonnement ionisant, la quantité totale de diluant B étant telle que les fonctions maléïmides de la résine de base A sont majoritairement consommées après l'action du rayonnement ionisant et étant choisie dans la gamme de 10 à 50 parties en poids pour 100 parties en poids de la résine de base A,
- imprégner le renfort fibreux du mélange obtenu, et
- soumettre le renfort imprégné à un rayonnement ionisant pour durcir la résine de base.

La résine de base A, le diluant B et leurs concentrations sont les mêmes que ci-dessus.

Ce procédé de fabrication de matériau composite peut être mis en oeuvre avec les moyens connus et en particulier en utilisant le dispositif de polymérisation par rayonnement X ou électronique décrit dans le document FR-A-2 564 029.

Le renfort fibreux peut consister en des fils tissés, tressés ou bobinés d'alumine, de verre, de carbone, de carbure ou carbonitrure de silicium, d'alumino-silicate de bore, d'aramide, etc.

L'irradiation d'un mélange résine de base A-diluant réactif B selon l'invention permet une conversion de 98% au moins des fonctions maléïmides de la résine de base, pour le mélange seul.

En revanche, le taux de conversion de ces fonctions est de l'ordre de 84 à 88% pour un matériau composite. Aussi, pour obtenir une optimisation des propriétés mécaniques, une post-cuisson du matériau à une température de 180 à 300°C, sous pression atmosphérique, pendant 30 minutes à 8 heures peut être envisagée. Pratiquement, on effectue la post-cuisson à une température de 180°C à 250°C pendant 2 à 8 heures.

Les doses d'irradiation du mélange de résine de base A-diluant réactif B sont importantes et se situent dans la gamme de 100 à 350 kGy et de préférence de 250 à 350 kGy.

Ces doses d'irradiation sont obtenues en faisant passer sous un accélérateur de particules chaque mélange résine de base A-diluant réactif B à une certaine vitesse. Cette vitesse est fonction de la dose et des caractéristiques de l'accélérateur ; soit D=K/V où D est la dose d'irradiation exprimée en kGy, K est un paramètre dépendant des caractéristiques (énergie et puissance) ainsi que des réglages de l'accélérateur (fréquence de balayage, largeur de balayage, fréquence d'impulsion) et V représente la vitesse de défilement du mélange.

Pour un accélérateur d'électrons de 10MeV et d'une puissance de 10kW, on obtient 10kGy=2m/min.

Etant donné que des doses aussi importantes se feraient à des vitesses trop lentes (6 à 7 cm/min), vitesse souvent difficile à obtenir avec un moyen industriel, on utilise avantageusement une distribution des doses par passages successifs du mélange sous l'accélérateur. Le meilleur compromis se fait par passage unitaire de 50kGy, ce qui correspond à une vitesse de 40cm/min.

L'invention a encore pour objet une utilisation d'au moins un monomère à terminaison vinylique tel que défini ci-dessus comme diluant réactif B pour le durcissement sous rayonnement ionisant d'une résine de base maléique A comportant au moins un monomère bis-maléïmide (a), ledit au moins monomère étant utilisé à raison de 10 à 50 parties en poids pour 100 parties en poids de résine de base A.

D'autres caractéristiques et avantages de l'invention ressortiront mieux de la description qui va suivre, à titre illustratif et non limitatif, en référence aux dessins annexés dans lesquels :
- la figure 1 montre l'influence de la nature du diluant réactif sur le taux de réticulation de la résine maleïque de base A, ici l'énergie résiduelle Er exprimée en J/g, en fonction de la dose d'irradiation D exprimée en kGy,
- la figure 2 montre l'influence de la quantité de diluant B, exprimée en % en poids, sur le taux (%) de conversion C des fonctions maléïmides,
- la figure 3 montre l'influence de la quantité de diluant Dil., exprimée en % en poids, sur l'énergie résiduelle de polymérisation Er exprimée en J/g,
- la figure 4 montre les variations du pourcentage de conversion C des fonctions maléïmides en fonction de la dose d'irradiation D exprimée en kGy, et
- la figure 5 est un exemple de réalisation d'un matériau composite conformément à l'invention, par bobinage filamentaire.

### EXEMPLE 1

100 parties en poids de N,N′-4,4′-diphényl méthane-bis-maléïmide sous forme d'une poudre fine, appelé composé M, et 40 parties en poids de NVP sont mélangées à chaud. Le mélange se présente sous la forme d'une suspension qu'on agite mécaniquement. Après une irradiation dr 300kGy, par irradiations successives de 50kGy chacune avec un faisceau d'électrons produit par un accélérateur de 10 MeV et d'une puissance de 10 kW, on obtient un solide totalement transparent à la lumière ayant une température de transition vitreuse de 330°C environ. Ce matériau peut être utilisé comme isolant thermique.

### EXEMPLE 2

A 100 parties en poids d'une résine de base A contenant 100 parties en poids de N,N′,4,4′-diphényl méthane-bis-maléïmide et 80 parties en poids de o,o-diallyl-bis-phenol A (formule e′) et chauffé à 80°C, on ajoute sous agitation lente 40 parties en poids de NVP chauffe à 40°C. L'ensemble est ensuite refroidi puis soumis à un bombardement électronique de 300kGy, comme décrit dans l'exemple 1. On obtient un solide homogène présentant des propriétés thermiques inférieures à celles du produit de l'exemple 1, mais avec des applications identiques.

### EXEMPLE 3

On décrit ci-après, la fabrication d'une résine maléique de base A contenant un monomère bis-maléïmide (a), un monomère maléïmide (b), de la N-vinylpyrrolidone-2 comme stabilisant (d) de l'eutectique bis-maléïmide/maléïmide et un acrylate (c).

### Etape 1

Dans un réacteur en verre de 350 cm³, muni d'un agitateur de type ancre en acier inoxydable et préchauffé par introduction dudit réacteur dans un bain d'huile porté à 165°C, on introduit en 12 minutes et sous agitation un mélange de :
- 165,33g de N,N′-4,4′-diphénylméthane-bis-maléïmide, (composé M), et
- 69,56g de N,N′-méthyl-4-phénylène-1,3-bis-maléïmide.

On continue à agiter le mélange jusqu'à fusion complète des ingrédients engagés et obtention d'une masse liquide homogéne ; la durée de cette agitation supplémentaire est de 5 minutes.

### Etape 2

On ajoute ensuite dans la masse liquide homogène 17,82g de N-vinylpyrrolidone-2, puis on laisse réagir l'ensemble sous agitation pendant 5 minutes.

### Etape 3

On sort le réacteur du bain d'huile chauffé, et on ajoute alors dans la masse réactionnelle toujours sous agitation un mélange de :
- 26,76g de diacrylate de bis-phenol A di(di-oxyéthylé), ce compost étant celui disponible dans le commerce sous la marque déposée EBECRYL 150 de la Société UCB, et
- 53,53g de composé acrylate consistant dans le mélange à base de 80% en poids d'un diacrylate d'époxy novolaque de formule (III) donnée en annexe 1, dans laquelle R₁=R₂ =H et t est un nombre égal à environ 3, et de 20% en poids de triacrylate de triméthylolpropane, ce composé étant celui disponible dans le commerce sous la marque déposée EBECRYL 629 de la Société UCB.

Après introduction des composés acrylates, on laisse réagir l'ensemble sous agitation pendant 3 minutes, puis on coule la masse réactionnelle obtenue dans un récipient métallique. Après refroidissemnt jusqu'à la température ambiante, on obtient la résine de base maléique A souhaitée à l'état solide. Sa viscosité à 80°C est de 5,5 Pa.s. Cette résine de base A est alors stockée jusqu'à son utilisation et son durcisement sous rayonnement ionisant.

Cette résine maléique A (a+b+c+d), avant son utilisation, est chauffée à 80°C sous agitation. Par ailleurs, le diluant réactif B consistant en un monomère à terminaison vinylique copolymérisable avec la résine de base A est chauffé à 40°C. On ajoute alors le diluant réactif B dans la résine de base A, sous agitation lente, puis on laisse refroidir l'ensemble jusqu'à une température d'utilisation. Enfin, on soumet l'ensemble à un bombardement électronique pour durcir la résine.

Le degré de réticulation des fonctions maléïmides de la résine de base A est supérieur à 95%.

Il est possible de préparer ce prépolymère A juste avant son utilisation. Dans ce cas, il n'est bien entendu pas nécessaire de laisser refroidir le prépolymère jusqu'à la température ambiante, dans le récipient métallique.

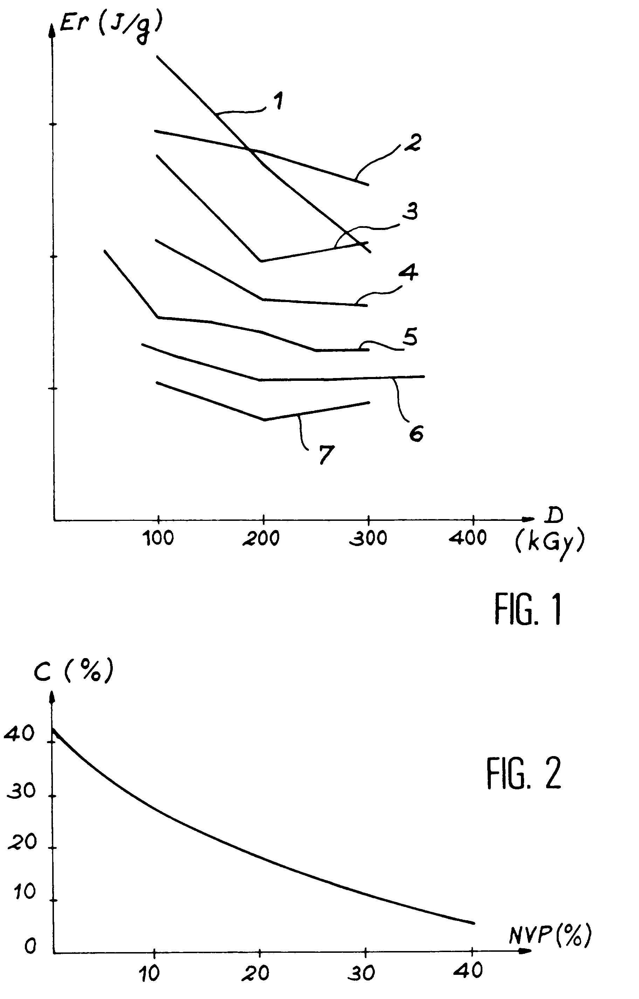

Les inventeurs ont fait varier la nature du diluant réactif B, sa concentration dans le mélange avant irradiation ainsi que les doses d'irradiation. Les résultats sont donnés dans les figures 1 à 4.

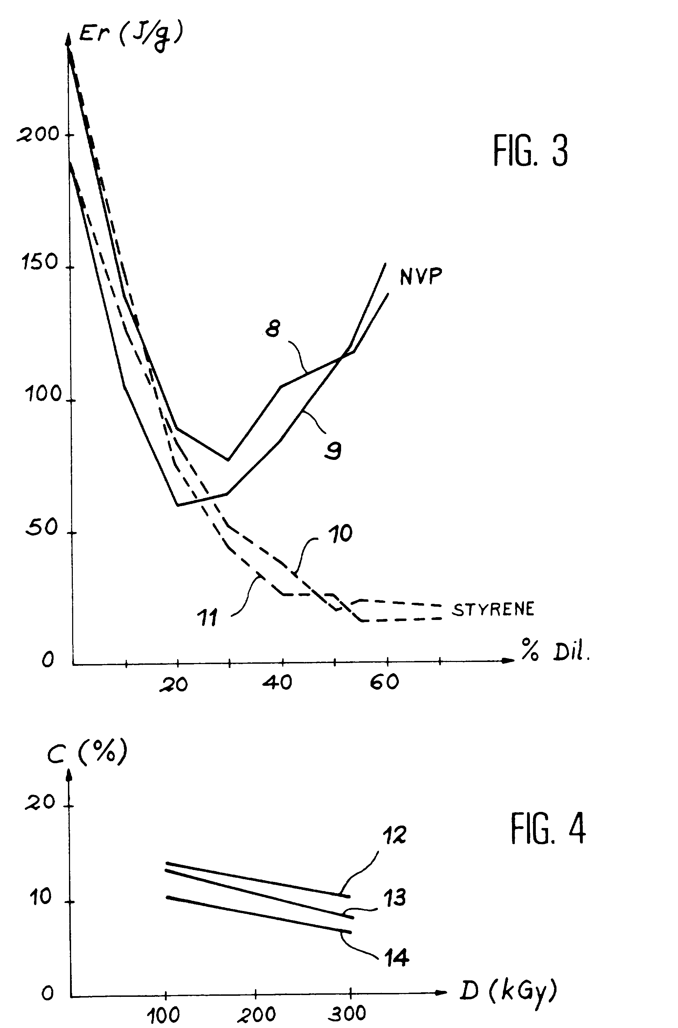

Les courbes des figures 1, 2 et 4 sont relatives a la résine de base A de l'exemple 3 et celles de la figure 3 sont relatives au composé M seul.

La concentration en diluant B est donnée ci-après en partie en poids pour 100 parties en poids de la résine de base (a+b+c+d).

Sur la figure 1, on donne les variations de l'énergie résiduelle Er de polymérisation de la résine maléique A, exprimée en J/g, en fonction de la dose d'irradiation D, exprimée en kGy, pour différents diluants réactifs et à des concentrations différentes.

Les courbes 1 à 7 correspondent respectivement à du BVE à 10 parties en poids, du styrène à 10 parties en poids, de la NVP à 10 parties en poids, du BVE à 30 parties en poids, de la NVP à 30 parties en poids, du DVB à 30 parties en poids et du styrène à 30 parties en poids.

L'énergie résiduelle Er est l'énergie nécessaire pour terminer la réticulation des fonctions maléïmides, après avoir irradier le mélange résine de base-diluant avec un faisceau d'électrons de 10MeV et d'une puissance de 10kW.

La mesure de l'énergie résiduelle Er est effectuée selon la technique connue de calorimétrie par balayage différentiel. L'énergie résiduelle décroît quand le taux de réticulation des fonctions maléïmides augmente lors du bombardement électronique.

Il ressort de la figure 1 que le DVB et le styrène à 30 parties en poids conduisent au taux de réticulation le plus élevé des fonctions maléïmides. Il s'ensuit que les résines durcies obtenues présentent des températures de transition vitreuse élevées de l'ordre de 360°C pour la résine à base de DVB et 350°C pour la résine à base de styrène.

Les mélanges résine-styrène et résine-DVB ont des temps de vie très courts, de l'ordre de 30 min. En revanche, le mélange résine-NVP a un temps de vie (supérieur à 12h) approprié à la réalisation de matériau composite notamment par imprégnation des fibres de renfort. En outre, comme cela ressort de la figure 1, l'énergie résiduelle des résines durcies à base de NVP est relativement faible. Leur température de transition vitreuse est de l'ordre de 300°C, pour une concentration de 30 parties en poids de NVP.

Sur la figure 2, on a représenté les variations du taux de conversion des fonctions maléïmides en fonction de la quantité de diluant vinylique B introduit dans le mélange résine de base-diluant. La conversion des fonctions maléiques C est donnée en pourcentage et correspond aux taux de réticulation de ces fonctions.

La courbe de la figure 2 a été tracée pour la résine de base (a+b+c+d) ci-dessus et pour la NVP comme diluant B. La concentration en NVP est donnée en partie en poids pour 100 parties en poids de la résine de base A et l'irradiation du mélange a été effectuée avec un faisceau d'électrons à une dose de 300kGy, comme décrit ci-dessus.

D'après la figure 2, on constate que le taux de conversion des fonctions maléïmides croît avec la quantité de diluant B dans le mélange. Toutefois, une trop grande quantité de diluant peut conduire à une homopolymérisation de ce diluant lors de l'irradiation qui est nuisible à la copolymérisation du bis-maleïmide et du diluant et qui peut entraîner des températures de transition vitreuse inférieures à celles recherchées.

Sur la figure 3, on a représenté l'énergie résiduelle de polymérisation des fonctions maléïmides, Er, exprimée en J/g en fonction de la concentration de diluant dans le mélange durcissable sous rayonnement ionisant. La résine de base A est ici composée uniquement de N,N′-4,4′-diphenylméthane-bis-maléïmide (exemple 1).

Les courbes 8 et 9 en trait continu sont relatives au diluant B NVP et les courbes 10 et 11 en trait pointillé sont relatives au diluant B styrène. L'irradiation du mélange avant mesure de l'énergie résiduelle a été effectuée par un bombardement électronique. Les courbes 8 et 11 correspondent à un bombardement électronique de 100kGy et les courbes 9 et 10 à un bombardement électronique de 300kGy.

Des courbes de la figure 3, il ressort que la quantité optimisée de diluant réactif B se situe entre 10 et 50 parties en poids et de préférence de 30 à 40 parties en poids pour 100 parties en poids de résine de base A. Au-dessus de 50 parties en poids on obtient une homopolymérisation du diluant vinylique et en-dessous de 10% en poids, un taux de conversion insuffisant.

Les doses d'irradiation des mélanges résine de base-diluant sont importantes puisqu'elles se situent dans la gamme de 100 à 300kGy ; elles sont en particulier 5 fois plus importantes que celles utilisées pour le durcissement des résines à terminaison acrylique. Cependant, on constate, en référence à la figure 4, que la plus grande partie des fonctions maléïmides est consommée entre 50 et 100kGy.

Les courbes de la figure 4 donnent les variations du taux de conversion C exprimé en pourcentage en fonction de la dose D d'irradiation exprimée en kGy. Le bombardement électronique est réalisé comme décrit précédemment et les courbes 12, 13 et 14 correspondent respectivement à de la NVP comme diluant B à des concentrations respectives de 33, 36 et 40 parties en poids pour 100 parties en poids de résine de base A, ce dernier ayant la composition donnée dans l'exemple 3.

L'un des intérêts majeurs des résines bis-maléïmides durcies selon l'invention, par rapport à leurs homologues durcies thermiquement est leur faible viscosité, ce qui autorise des mises en oeuvre très simples, équivalentes à celles utilisées pour les résines époxy à terminaison acrylique. En particulier, le procédé de durcissement de résines bis-maléïmides selon l'invention est bien adapté à la réalisation de matériau composite à renfort fibreux par bobinage filamentaire ou imprégnation de tissu.

Dans le tableau I ci-après, on donne les propriétés comparées d'une résine bis-maléïmide (BMI) polymérisable à chaud et d'un mélange résine bis-maléïmide A-diluant B polymérisable sous rayonnement ionisant.

**TABLEAU I**

| Résine BMI thermique | | Résine BMI e⁻ (x) |
|---|---|---|
| Viscosité à température ambiante | solide | 7,46 Pa.s |
| température d'imprégnation de tissus ou bobinage filamentaire | 100°C | 35-40°C |
| Durée de vie des résine en pot des formulations | <3h | >12h (en cours de précision) |

(x) mélange résine BMI-diluant réticulable sous rayonnement ionisant.

Les caractéristiques mécaniques des résines bis-maléïmide durcies selon l'invention sont en outre comparables à celles des résines bis-maléïmide durcies à chaud. En particulier, les caractéristiques en flexion de la résine durcie de l'exemple 3 sont les suivantes :
- contrainte en flexion = 88 MPa,
- module en flexion = 4230 MPa,
- allongement = 2 2,5 %.

Les mélanges résine de base-diluant polymérisables selon l'invention sont particulièrement intéressants dans le cadre de la réalisation de matériaux composites par bobinage filamentaire. Cette technique de fabrication d'un matériau composite conduit à un pourcentage de résine durcie (A+B) en poids, dans le matériau composite, de 30% environ.

Le degré de polymérisation des fonctions maléïmides obtenu sur des matériaux composites est plus faible que celui obtenu pour un mélange résine de base-diluant seul. Les analyses FTIR (spectrométrie infrarouge à transformée de Fourier) et RMNC ₁₃ (résonance magnétique nucléaire des atomes de carbone 13) bien connues de l'homme de l'art donnent des degrés de conversion des fonctions maléïmides de l'ordre de 84 à 88% dans les composites. Ces matériaux composites présentent toutefois des caractéristiques mécaniques intéressantes telles qu'une contrainte de cisaillement interlaminaire de 37 MPa.

Pour obtenir une optimisation des propriétés mécaniques, une post-cuisson est nécessaire. Après cette post-cuisson, les fonctions maléïmides résiduelles sont inférieures à 6%. Cette post-cuisson peut être effectuée à basse température, avec des temps relativement longs ou à des températures plus élevées mais avec des temps plus courts.

Cette étape de post-cuisson joue le même rôle que la post-cuisson effectuée sur les résines bis-maléïmides polymérisables à chaud de l'art antérieur. Avantageusement, l'étape de post-cuisson de l'invention est effectuée à plus basse température que celle des résines thermiques et pendant un temps beaucoup plus court. En effet, la post-cuisson des résines bis-maléïmides thermiques est de 16h à 250°C.

Une étude sur la contrainte de cisaillement interlaminaire d'un matériau composite a été effectuée pour différentes conditions de post-cuisson. Les résultats sont portés dans le tableau II ci-après. Cette post-cuisson a été effectuée pour des matériaux composites obtenus comme décrits dans l'exemple 4 ci-après.

**TABLEAU II**

| | | | | | |
|---|---|---|---|---|---|
| POST-CUISSON | Température °C | - | 180 | 200 | 250 |
| | Durée h | | 8 | 4 | 2 |
| CONTRAINTE DE CISAILLEMENT MPa | | 37 | 50 | 48,3 | 50 |

### EXEMPLE 4

On décrit ci-après la fabrication de deux viroles inter-étage de propulseurs de fusées par bobinage filamentaire.

Le bobinage est effectué sur une mèche de carbone imprégnée par une formulation liquide, fraîchement préparée contenant 100 parties en poids de résine de base A telle que décrite dans l'exemple 3 et 40 parties en poids de NVP comme diluant B. La mèche de carbone est constituée de 3000 à 12000 filaments. L'imprégnation se fait en faisant défiler en continu, au rouleau, la mèche dans le bain de résine, à une vitesse variable en fonction de la trajectoire de dépose, de façon connue.

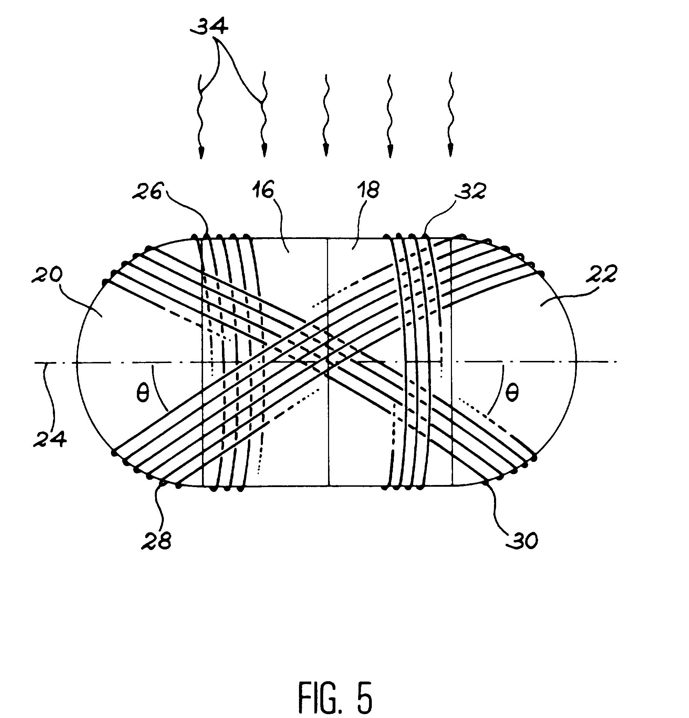

Cette mèche est bobinée sur la structure monobloc représentée sur la figure 5 constituée de deux viroles homothétiques 16 et 18 prises en sandwich entre deux satellites 20 et 22 hémisphériques identiques. L'ensemble de la structure présente un axe de révolution 24.

Les deux viroles sont destinées à travailler essentiellement en compression et sont donc fabriquées selon quatre enroulements successifs : un enroulement interne 26 selon la circonférence des viroles, deux enroulements longitudinaux 28 et 30 formant chacun un angle θ de 30° par rapport à l'axe 24 et enfin un enroulement 32 externe selon la circonférence.

La température d'imprégnation de la mèche de carbone est de 35°C et la viscosité du mélange résine-diluant est de 0,5.10 Pa.s. La durée de vie en pot du mélange résine-diluant polymérisable selon l'invention est supérieure à 12h. Le taux d'imprégnation est de 30% en poids.

L'imprégnation de la mèche de carbone au rouleau s'effectue correctement et les trajectoires de dépôt restent stables. Le durcissement du matériau est fait à 300kGy par passage de 50kGy à une vitesse de 20 cm/min en rotation selon l'axe 24, le temps total d'irradiation est de 2h. Le bobinage est réalisé avec la même facilite que pour une mèche de carbone impregnée d'une résine époxy à terminaison acrylique.

Après polymérisation sous bombardement électronique, la structure est tronçonnée pour récupérer les deux viroles 16 et 18.

On effectue alors la post-cuisson des viroles à 180°C pendant 8h. La stabilité dimensionnelle, avant et après post-cuisson, est bonne.

### CONTRE EXEMPLE

Avec une résine bis-maléïmide durcissable thermiquement, il faut effectuer deux étapes successives de cuisson du matériau composite, sous une pression de 5 à 10.10⁵Pa : 3 heures à 130°C, puis 5 heures à 200°C, puis l'étape de post-cuisson : 16 heures à 250°C.

La durée de polymérisation à chaud des résines bis-maléïmiques thermiques est donc très supérieure à la durée de polymérisation sous rayonnement ionisant de ces mêmes résines selon l'invention.

Les résines durcies selon l'invention peuvent être utilisées pour la fabrication de tout matériau composite à tenue thermique élevée comportant une structure à renfort fibreux.

### ANNEXE I

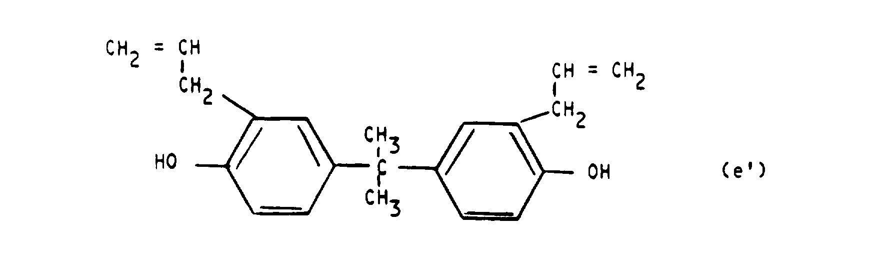

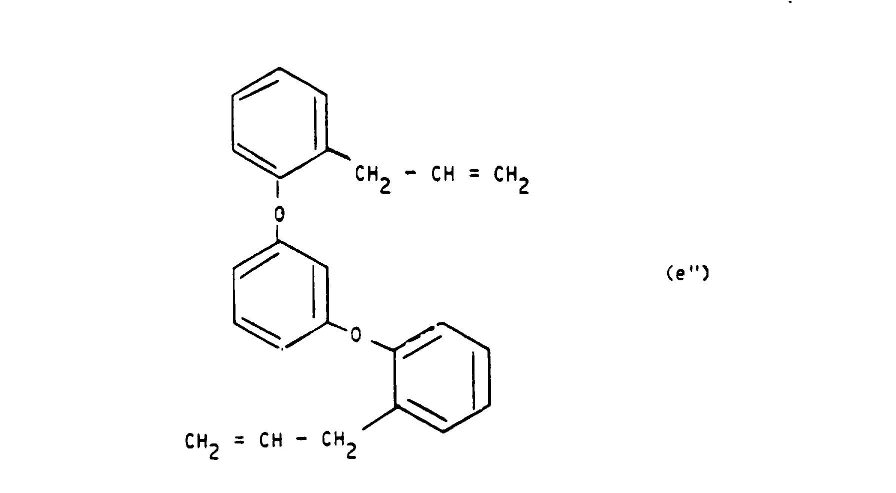

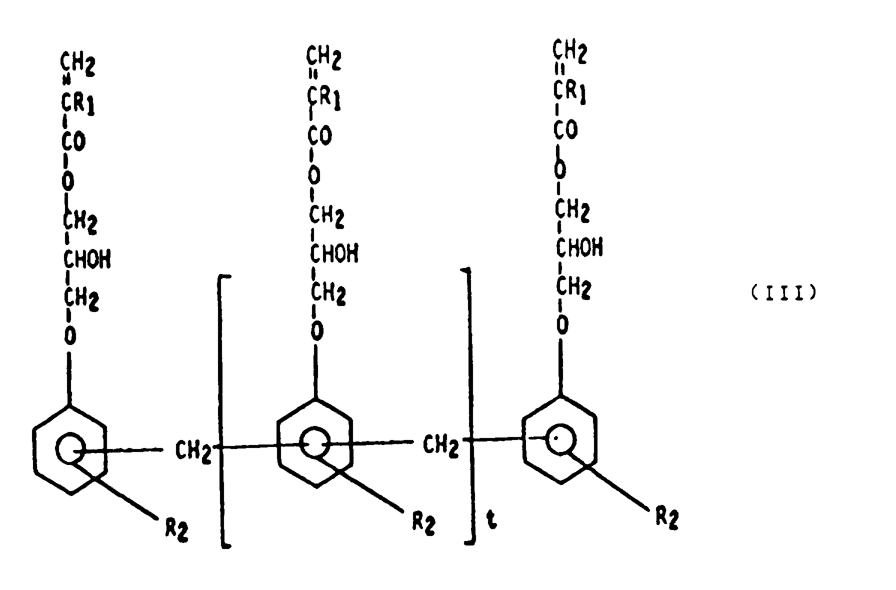

### ANNEXE II

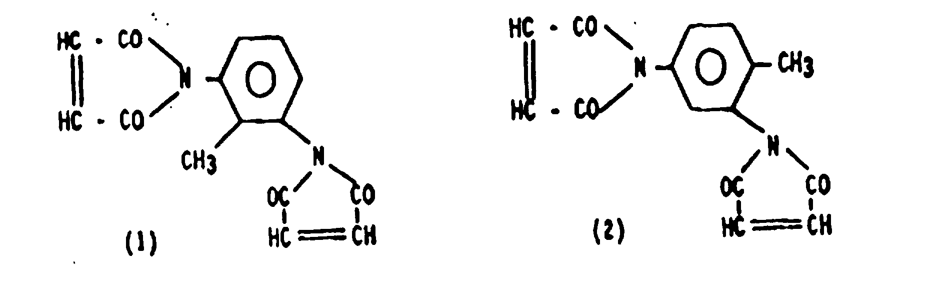

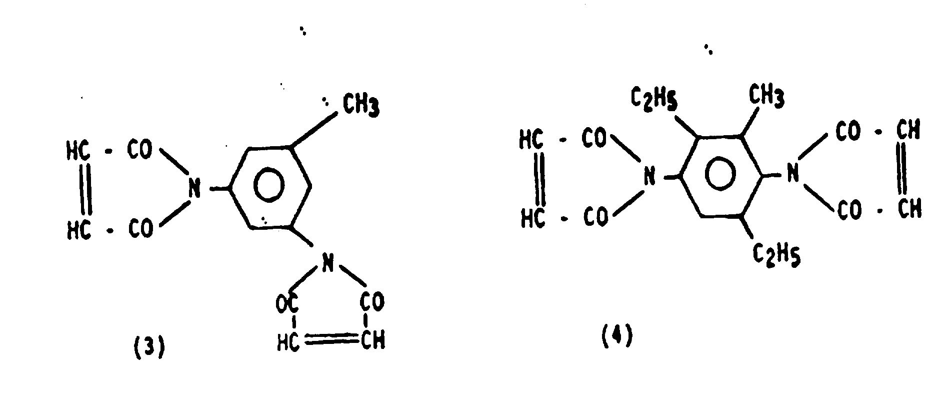

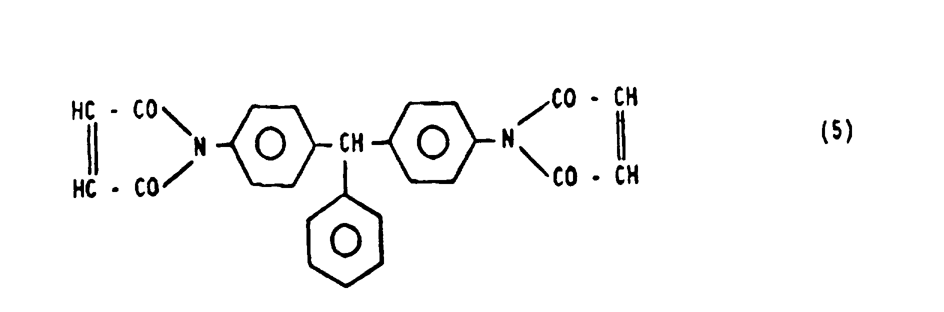

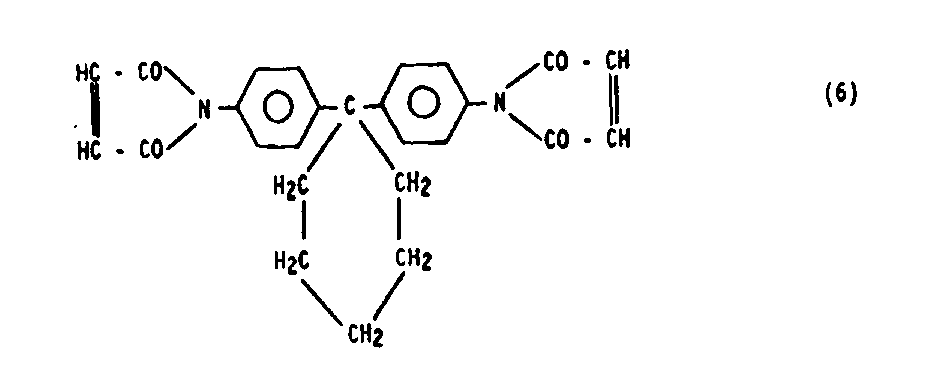

### ANNEXE III

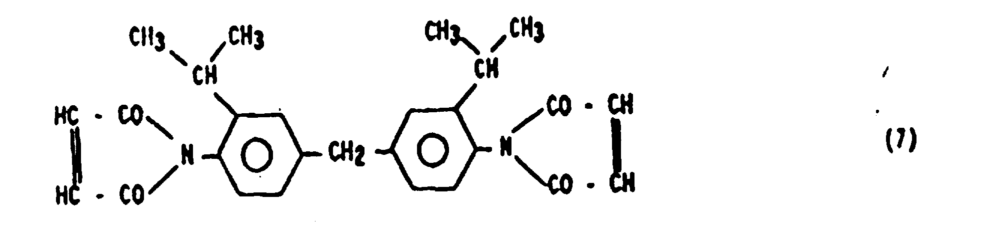

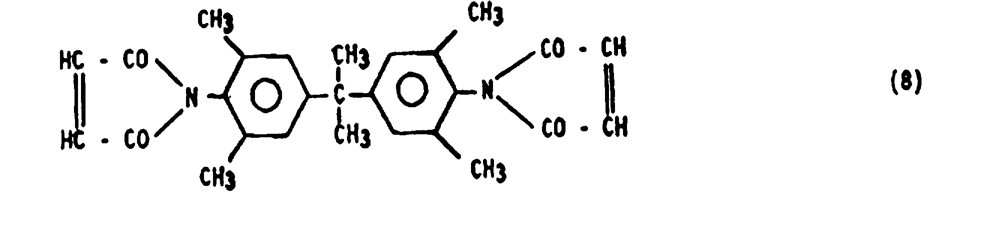

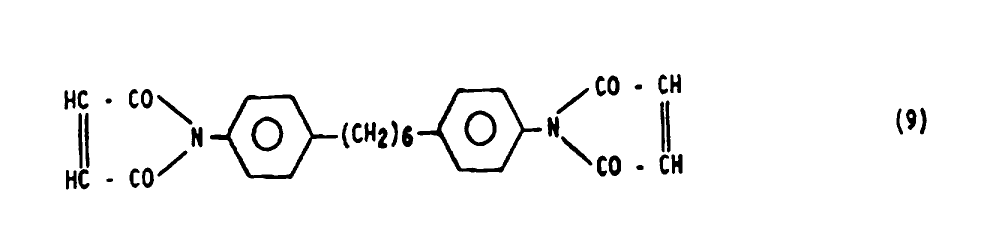

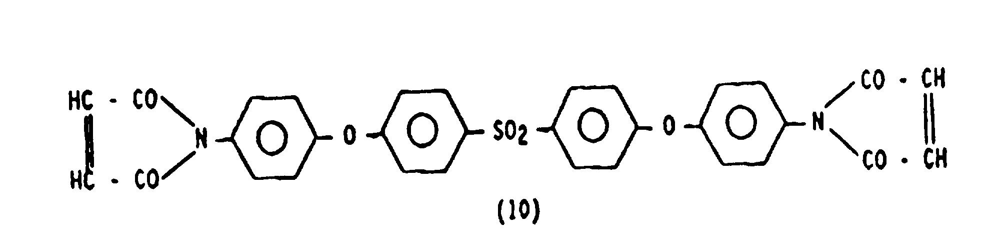

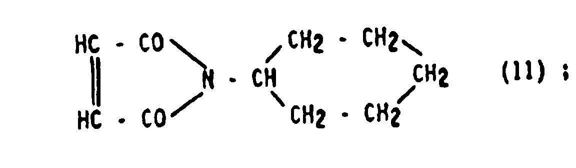

## Revendications

1. Procédé de durcissement sous rayonnement ionisant d'une résine maléique de base A comportant au moins un monomère bis-maléïmide (a), consistant à ajouter à la résine de base A, avant son utilisation, au moins un diluant réactif B consistant en un monomère à terminaison vinylique copolymérisable avec la résine de base A lorsqu'on soumet un mélange de la résine de base A et du diluant B à un rayonnement ionisant (34), la quantité totale de diluant B étant telle que les fonctions maléïmides de la résine de base A sont consommées après l'action du rayonnement ionisant et étant choisie dans la gamme de 10 à 50 parties en poids pour 100 parties en poids de la résine de base A, puis à soumettre le mélange à un rayonnement ionisant (34).

2. Procédé de fabrication d'un matériau composite comportant un renfort fibreux (26, 28, 30, 32) noyé dans une matrice organique, consistant à :
- ajouter à une résine maléïque de base A comportant au moins un monomère bis-maléïmide (a), avant son utilisation, au moins un diluant réactif B consistant en un monomère à terminaison vinylique copolymérisable avec la résine de base A lorsqu'on soumet un mélange de la résine de base A et du diluant B à un rayonnement ionisant (34), la quantité totale de diluant B étant telle que les fonctions maléïmides de la résine de base A sont majoritairement consommées après l'action du rayonnement ionisant et étant choisie dans la gamme de 10 à 50 parties en poids pour 100 parties en poids de la résine de base A,
- imprégner le renfort fibreux du mélange obtenu, et
- soumettre le renfort imprégné à un rayonnement ionisant (34) pour durcir la résine de base.

3. Procédé selon la revendication 1 ou 2, caractérisé en ce que le mélange est obtenu en fondant la résine de base A et en l'ajoutant, sous agitation lente, au diluant réactif B chauffé.

4. Procédé selon l'une quelconque des revendications 1 à 3, caractérisé en ce que le diluant B est choisi parmi le divinylbenzène, le butylvinyléther, les N-vinylpyrrolidones, le triméthylol propane triacrylate, le triméthylol propane triméthacrylate, le triallylcyanurate, les vinylanisoles, les vinylpyridines, le styrène, les alkylstyrènes et leurs mélanges.

5. Procédé selon l'une quelconque des revendications 1 à 4, caractérisé en ce que le diluant B est la N-vinylpyrrolidone-2.

6. Procédé selon l'une quelconque des revendications 1 à 5, caractérisé en ce que la quantité totale de diluant B est de 20 à 40 parties en poids pour 100 parties en poids de résine de base A.

7. Procédé selon l'une quelconque des revendications 1 à 6, caractérisé en ce que la résine présente une viscosité à l'état fondu comprise entre 0,1 Pa.s et 50 Pa.s et est le produit de réaction en milieu liquide homogène, à une température allant de 50°C à 250°C, entre les réactifs (a), (b), (c) et (d) suivants :
- (a) est un N,N′-bis-maléïmide de formule : 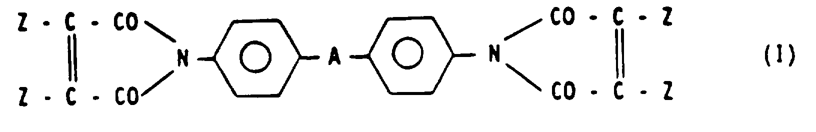 dans laquelle :
. les symboles Z, identiques ou différents, représentent chacun H, CH₃ ou Cl ;
. le symbole A représente un lien valentiel simple ou un groupement : 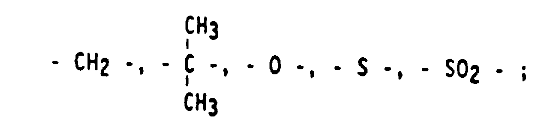
- (b) consiste dans au moins un maléimide choisi parmi les composés de formule : 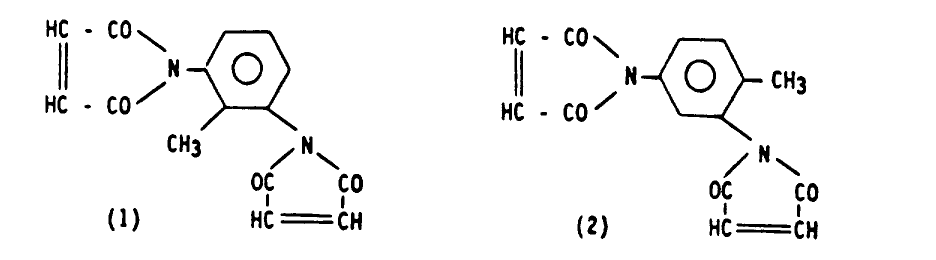 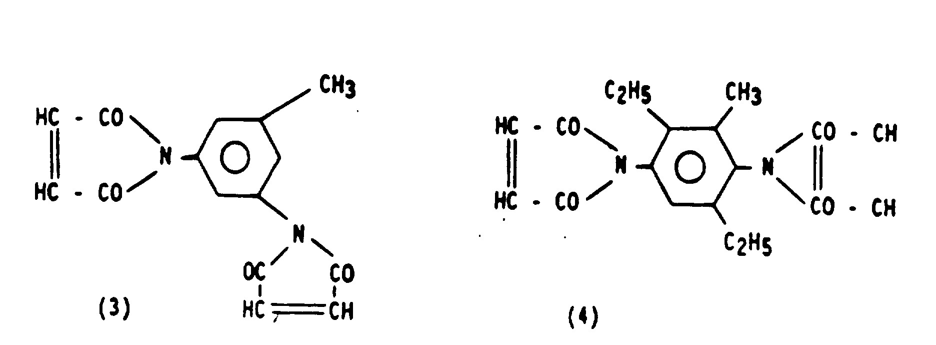 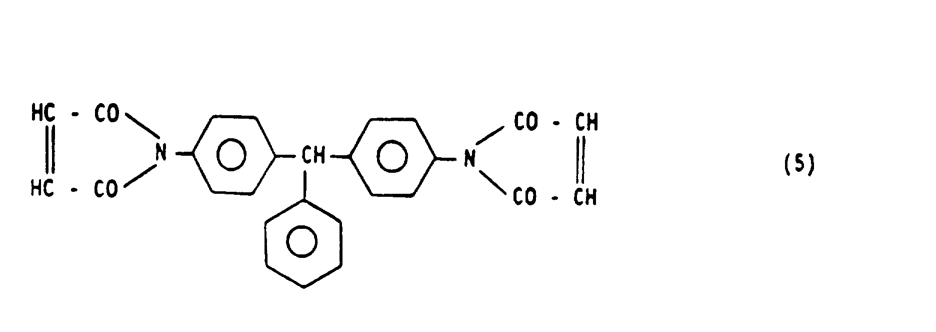 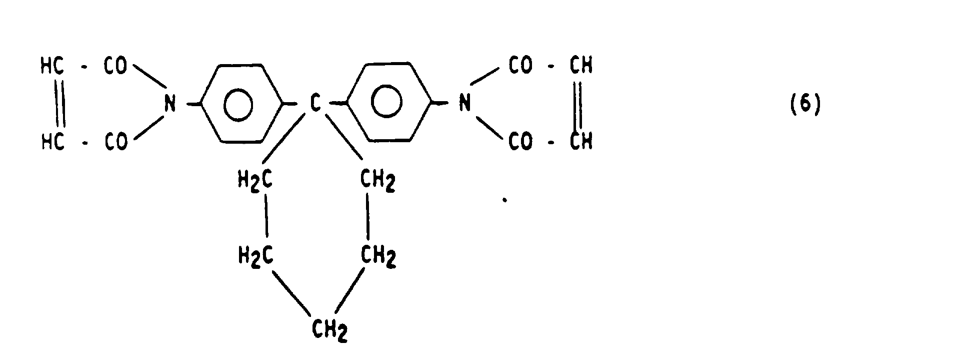 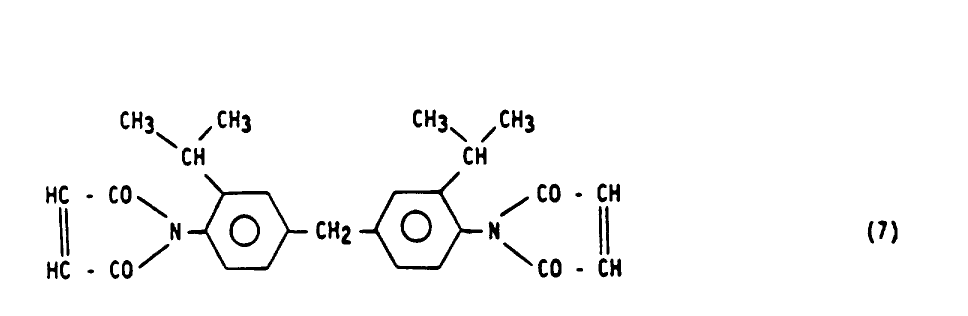 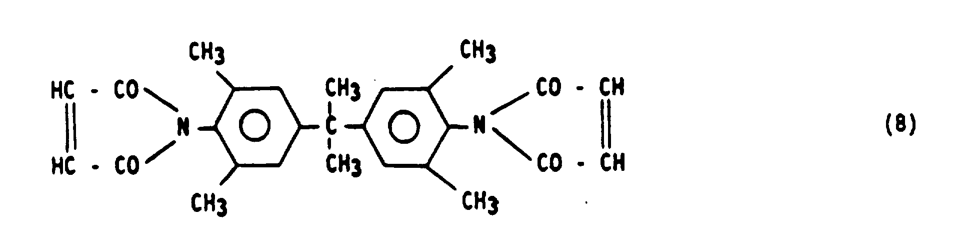 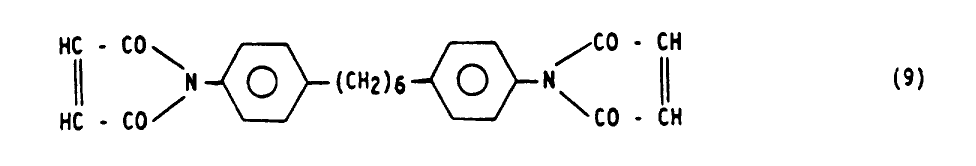 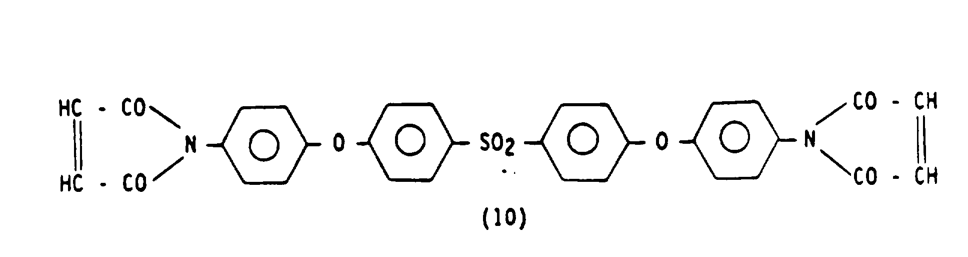 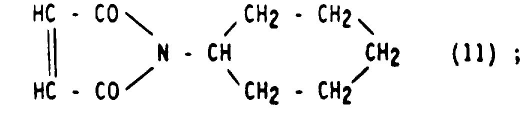 - (c) est un réactif acrylate consistant dans un ou plusieurs composé(s) de formule générale : 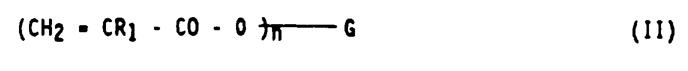 dans laquelle :
. le symbole R₁ représente un atome d'hydrogène ou un radical méthyle ;
. n représente un nombre entier ou fractionnaire au moins égal à 1 et au plus égal à 8 ;
. le symbole G représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical G aromatique pouvant être portée(s) par un atome de carbone d'une chaîne aliphatique et/ou par un atome de carbone d'un noyau benzénique ;
- (d) est un réactif comprenant une double liaison vinylique choisi parmi les vinylpyridines, la N-vinylpyrrolidone-2, le vinyltétrahydrofuranne, le styrène et leurs mélanges.

8. Procédé selon l'une quelconque des revendications 1 à 7, caractérisé en ce que le bis-maléïmide (a) est le N,N'-4,4'-diphénylméthane-bis-maléïmide.

9. Procédé selon l'une quelconque des revendications 1 à 8, caractérisé en ce que la dose d'irradiation est choisie dans la gamme de 250 à 350 kGy.

10. Procédé selon l'une quelconque des revendications 1 à 9, caractérisé en ce qu'on effectue plusieurs irradiations successives jusqu'à l'obtention de la dose voulue d'irradiation.

11. Procédé selon la revendication 10, caractérisé en ce que la dose d'irradiation à chaque irradiation est de 50 kGy environ.

12. Procédé selon l'une quelconque des revendications 1 à 11, caractérisé en ce qu'on soumet le mélange à un bombardement électronique ou X.

13. Procédé selon l'une quelconque des revendications 2 à 12, caractérisé en ce qu'on effectue une post-cuisson du matériau, à une température de 180 à 300°C sous pression atmosphérique, pendant 30 minutes à 8 heures.

14. Utilisation d'au moins un monomère à terminaison vinylique comme diluant réactif B pour le durcissement sous rayonnement ionisant d'une résine de base maléïque A comportant au moins un monomère bis-maléïmide (a), ledit au moins monomère étant utilisé à raison de 10 à 50 parties en poids pour 100 parties en poids de résine de base A.

15. Utilisation selon la revendication 14, caractérisée en ce que le monomère à terminaison vinylique est choisi parmi le divinylbenzène, le butylvinyléther, la N-vinylpyrrolidone-2, le triméthylol propane triacrylate, le triméthylol propane triméthacrylate, le triallylcyanurate, les vinylanisoles, les vinylpyridines, le styrène, les alkylstyrènes et leurs mélanges.

16. Utilisation selon la revendication 14 ou 15, caractérisée en ce que le monomère vinylique consiste en de la N-vinyl pyrrolidone-2.

17. Utilisation selon l'une quelconque des revendications 14 à 16, caractérisée en ce que le monomère vinylique est utilisé à raison de 20 à 40 parties en poids pour 100 parties en poids de résine de base A.

## Patentansprüche

1. Verfahren zur Härtung unter ionisierender Strahlung eines Basis-maleïmidharzes A, das mindestens ein Bismaleimidinonomer (a) umfaßt, darin bestehend, dem Basisharz A vor seiner Verwendung mindestens ein reaktives Verdünnungsmittel B hinzuzufügen, das aus einem Monomer mit Vinylende besteht, das mit dem Basisharz A copolymerisieren kann, wenn die Mischung aus dem Basisharz A und dem Verdünnungsmittel B einer ionisierenden Strahlung (34) ausgesetzt wird, wobei die Gesamtmenge des Verdünnungsmittels B so ist, daß die Maleimidgruppen des Basisharzes A nach der ionisierenden Bestrahlung verbraucht sind, und aus dem Bereich von 10 bis 50 Gew.-% bezogen auf das Basisharz A gewählt wird, und dann die Mischung einer ionisierenden Strahlung (34) auszusetzen.

2. Herstellungsverfahren eines Verbundmaterials, das eine Faserverstärkung (26, 28, 30, 32) enthält, die in einer organischen Matrix eingebettet ist, darin bestehend:
- einem Basismelaimidharz A, das mindestens ein Bismaleimidmonomer (a) umfaßt, vor seiner Verwendung mindestens ein reaktives Verdünnungsmittel B hinzuzufügen, das aus einem Monomer mit Vinylende besteht, das mit dem Basisharz A copolymerisieren kann, wenn die Mischung aus Basisharz A und Verdünnungsmittel B einer ionisierenden Strahlung (34) ausgesetzt wird, wobei die Gesamtmenge des Verdünnungsmittels B so ist, daß die Maleimidgruppen des Basisharzes A nach der ionisierenden Bestrahlung größtenteils verbraucht sind, und aus dem Bereich von 10 bis 50 Gew.-% bezogen auf das Basisharz A ausgewählt wird,
- die Faserverstärkung mit der erhaltenen Mischung zu imprägnieren, und
- die imprägnierte Verstärkung einer ionisierenden Strahlung (34) auszusetzen, um das Basisharz zu härten.

3. Verfahren gemäß Anspruch 1 oder 2,
**dadurch gekennzeichnet,**
daß die Mischung erhalten wird, indem das Basisharz A gebildet und und dem erhitzten, reaktiven Verdünnungsmittel B unter langsamer Bewegung hinzugefügt wird.

4. Verfahren gemäß einem der Ansprüche 1 bis 3,
**dadurch gekennzeichnet,**
daß das Verdünnungsmittel B ausgewählt wird aus dein Divinylbenzol, dem Butylvinylether, den N-Vinylpyrrolidonen, dem Trimethylolpropantriacrylat, dem Trimethylolpropantrimethacrylat, dem Triallylcyanurat, den Vinylanisolen, den Vinylpyridinen, dem Styrol, den Alkylstyrolen und ihren Mischungen.

5. Verfahren gemäß einem der Ansprüche 1 bis 4,
**dadurch gekennzeichnet,**
daß das Verdünnungsmittel B das N-Vinylpyrrolidon-2 ist.

6. Verfahren gemäß einem der Ansprüche 1 bis 5,
**dadurch gekennzeichnet,**
daß die Gesamtmenge des Verdünnungsmittels B zwischen 20 und 40 Gew.-% bezogen auf das Basisharz A beträgt.

7. Verfahren gemäß einem der Ansprüche 1 bis 6,
**dadurch gekennzeichnet,**
daß das vorliegende Harz im gebildeten Zustand eine Viskosität besitzt, die zwischen 0,1 Pas und 50 Pas liegt, und das Reaktionsprodukt ist aus einer homogenen flüssigen Mischung bei einer Temperatur, die zwischen 50°C und 250°C liegt, der folgenden Reagenzien (a), (b), (c) und (d), wobei:
- (a) ein N, N'-Bismaleimid der Formel ist: 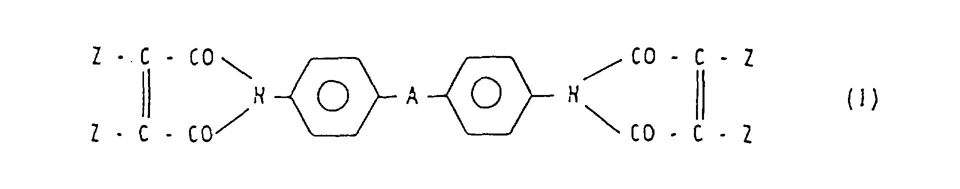 worin:
- die Symbole Z, identisch oder unterschiedlich, jeweils CH₃ oder Cl repräsentieren;
- das Symbol A eine einfache Valenzverbindung oder eine Gruppierung ist: 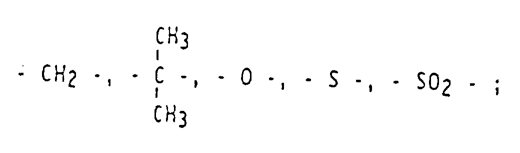
- (b) mindestens aus einem Maleimid besteht, das aus den Verbindungen der Fonnel gewählt wird: 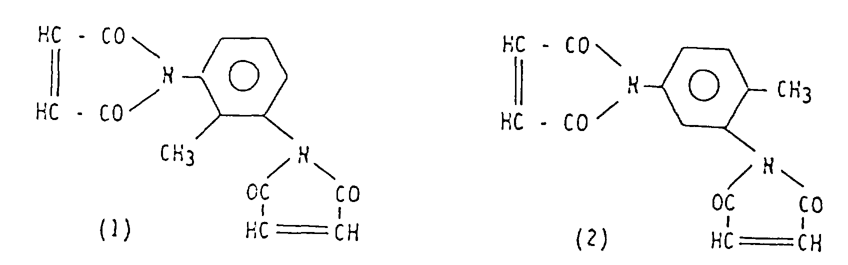 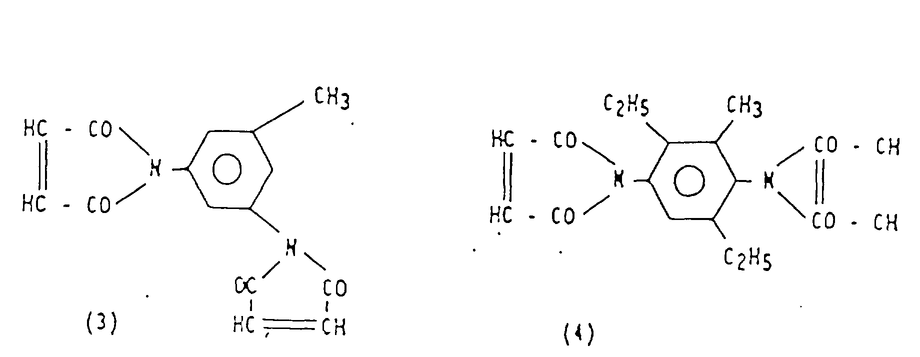 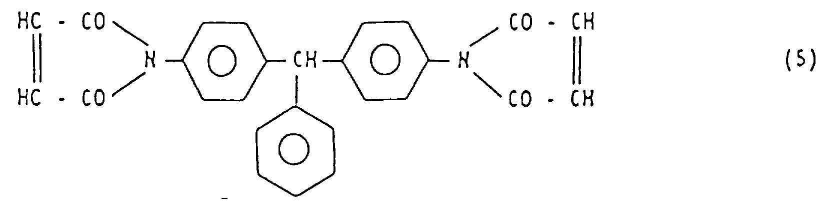 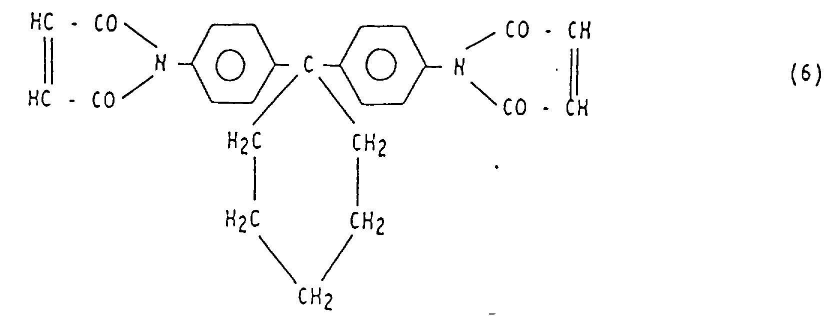 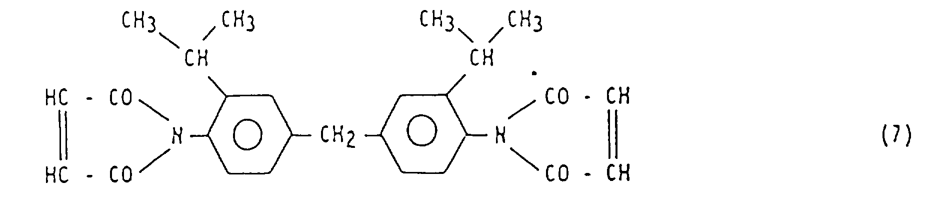 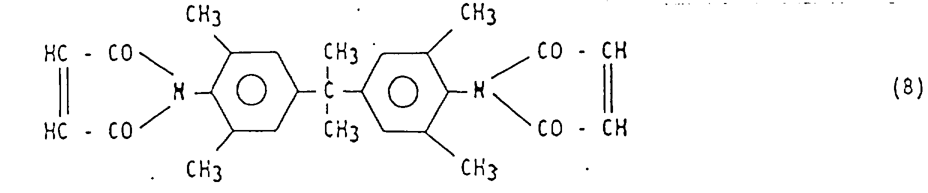 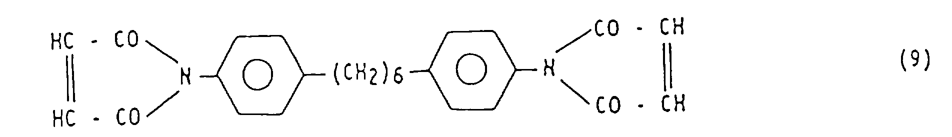 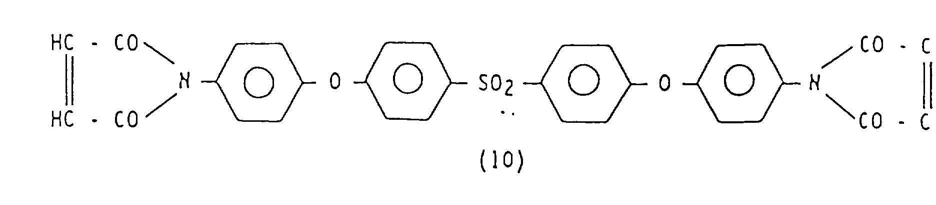 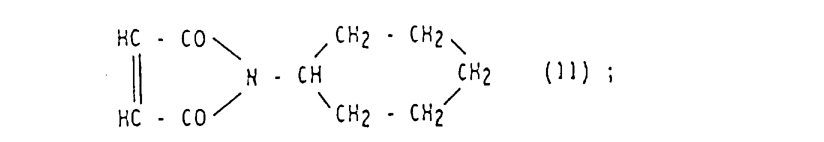
- (c) ein reaktives Acrylat ist, bestehend aus einer oder mehreren Verbindungen der allgemeinen Formel: 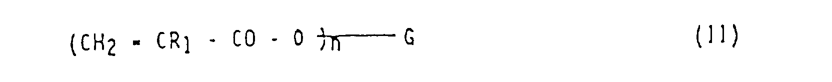 worin:
- das Symbol R₁ ein Wasserstoffatom oder ein Methylradikal darstellt;
- n eine ganze oder gebrochene Zahl darstellt, die mindestens gleich 1 und höchstens gleich 8 ist;
- das Symbol G ein organisches Radikal der Wertigkeit n darstellt, das ein Derivat ist aus: einem gesättigten aliphatischen Rest, linear oder verzweigt, der 1 bis 3 Kohlenstoffatome besitzt und ein oder mehrere Sauerstoffbrücken und/oder ein oder mehrere freie Hydroxylgruppen binden kann; einem aromatischen Rest (des arylischen oder arylaliphatischen Typs), der 6 bis 150 Kohlenstoffatome besitzt, die einen Benzolkern bilden, der durch 1 bis 3 Alkylradikale ersetzt werden kann, die zwischen 1 und 5 Kohlenstoffatome besitzen, oder die mehrere Benzolringe bilden, die gegebenenfalls wie oben angegeben ersetzt sind und untereinander durch einfache Valenzverbindung, durch eine inerte Gruppe oder durch ein Alkylradikal mit 1 bis 3 Kohlenstoffatomen verbunden sind, wobei der aromatische Rest an verschiedenen Stellen seiner Struktur ein oder mehrere Sauerstoffbrücken und/oder ein oder mehrere freie Hydroxylgruppen binden kann, wobei der (oder die) freie(n) Valenz(en) des aromatischen Radikals G von einem Kohlenstoffatom der aliphatischen Kette und/oder von einem Kohlenstoffatom eines Benzolrings aufgenommen werden kann (können);
- (d) ein Reagenz ist, das eine doppelte Vinylverbindung umfaßt, welche aus den Vinylpyridinen, dem N-Vinylpyrrolidon-2, dem Vinyltetrahydrofuran, dem Styrol und ihren Mischungen ausgewählt wird.

8. Verfahren gemäß einem der Ansprüche 1 bis 7,
**dadurch gekennzeichnet,**
daß das Bismaleimid (a) das N-N'-4,4'-Diphenylmethanbismaleimid ist.

9. Verfahren gemäß einem der Ansprüche 1 bis 8,
**dadurch gekennzeichnet,**
daß die Strahlungsdosis aus dem Bereich zwischen 250 bis 350 kGy ausgewählt wird.

10. Verfahren gemäß einem der Ansprüche 1 bis 9,
**dadurch gekennzeichnet,**
daß mehrere Bestrahlungen nacheinander ausgeführt werden, bis die gewünschte Strahlungsdosis erreicht ist.

11. Verfahren gemäß Anspruch 10,
**dadurch gekennzeichnet,**
daß die Strahlungsdosis bei jeder Bestrahlung etwa 50 kGy ist.

12. Verfahren gemäß einem der Ansprüche 1 bis 11,
**dadurch gekennzeichnet,**
daß die Mischung einem Elektronen- oder Röntgenbeschuß ausgesetzt wird.

13. Verfahren gemäß einem der Ansprüche 2 bis 12,
**dadurch gekennzeichnet,**
daß eine Nachhärtung des Materials bei einer Temperatur von 180 bis 300°C bei atmosphärischem Druck über 30 Minuten bis 8 Stunden ausgeführt wird.

14. Verwendung mindestens eines Monomers mit Vinylende als reaktives Verdünnungsmittel B für die Härtung unter ionisierender Bestrahlung eines Harzes auf Maleimidbasis A, das mindestens ein Bismaleimidmonomer (a) umfaßt, wobei das mindeste Monomer in einem Verhältnis von 10 bis 50 Gew.-% bezogen auf das Basisharz A verwendet wird.

15. Verwendung gemäß Anspruch 14,
**dadurch gekennzeichnet,**
daß das Monomer mit Vinylende ausgewählt wird aus dem Divinylbenzol, dem Butylvinylether, dem N-Viny]pyrrolidon-2, dem Trimethylolpropantriacrylat, dem Trimethylolpropantrimethacrylat, dem Trialylcyanurat, den Vinylanisolen, den Vinylpyridinen, dem Styrol, den Alkylstyrolen und ihren Mischungen.

16. Verwendung gemäß Anspruch 14 oder 15,
**dadurch gekennzeichnet,**
daß das Vinylmonomer aus dem N-Vinylpyrrolidon-2 besteht.

17. Verwendung gemäß einem der Ansprüche 14 bis 16,
**dadurch gekennzeichnet,**
daß das Vinylmonomer im Verhältnis von 20 bis 40 Gew.-Anteilen bezogen auf das Basisharz A verwendet wird.

## Claims

1. Process for hardening under ionizing radiation of a basic maleic resin A having at least one bis-maleimide monomer (a), consisting of adding to the basic resin A, prior to its use, at least one reactive diluent B consisting of a monomer having a vinyl termination copolymerizable with the basic resin A on subjecting a mixture of the basic resin A and the diluent B to ionizing radiation (34), the total quantity of diluent B being such that the maleimide functions of the basic resin A are consumed following the action of the ionizing radiation and being chosen in the range 10 to 50 parts by weight for 100 parts by weight of the basic resin A, followed by subjecting the mixture to ionizing radiation (34).

2. Process for the production of a composite material incorporating a fibrous reinforcement (26, 28, 30, 32) embedded in an organic matrix consisting of adding to a basic maleic resin A having at least one bis-maleimide monomer (a), prior to its use, at least one reactive diluent B consisting of a monomer having a vinyl termination copolymerizable with the basic resin A on subjecting the mixture of the basic resin A and the diluent B to an ionizing radiation (34), the total quantity of diluent B being such that the maleimide functions of the basic resin A are largely consumed following the action of the ionizing radiation and being chosen in the range 10 to 50 parts by weight for 100 parts by weight of the basic resin A, impregnating the fibrous reinforcement of the mixture obtained and subjecting the impregnated reinforcement to an ionizing radiation (34) for hardening the basic resin.

3. Process according to claim 1 or 2, characterized in that the mixture is obtained by melting the basic resin A and by adding it, accompanied by slow stirring, to the heated reactive diluent B.

4. Process according to any one of the claims 1 to 3, characterized in that diluent B is chosen from among divinyl benzene, butyl vinyl ether, N-vinyl pyrrolidones, trimethylol propane triacrylate, trimethylol propane trimethacrylate, triallyl cyanurate, vinyl anisoles, vinyl pyridines, styrene, alkyl styrenes and mixtures thereof.

5. Process according to any one of the claims 1 to 4, characterized in that the diluent B is N-vinyl-2-pyrrolidone.

6. Process according to any one of the claims 1 to 5, characterized in that the total quantity of diluent B is 20 to 40 parts by weight for 100 parts by weight of basic resin A.

7. Process according to any one of the claims 1 to 6, characterized in that the resin has a viscosity in the melted state between 0.1 and 50 Pa.s and is the reaction product in a homogeneous liquid medium, at a temperature from 50 to 250°C, between the following reagents (a), (b), (c) and (d):
- (a) is a N,N'-bis-maleimide of formula: 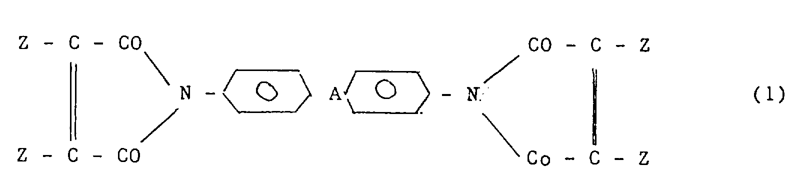 in which:
- the symbols Z, which are the same or different, in each case represent H, CH₃ or Cl;
- the symbol A represents a single valency bond or a group: 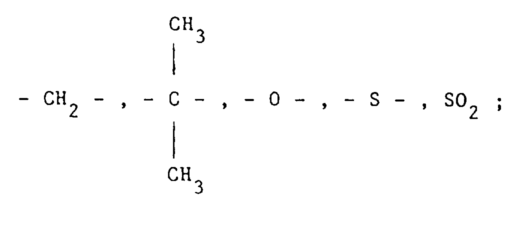
- (b) consists of at least one maleimide chosen from among the compounds of formula: 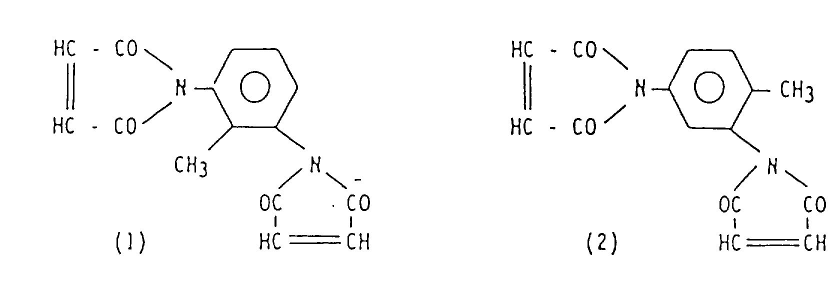 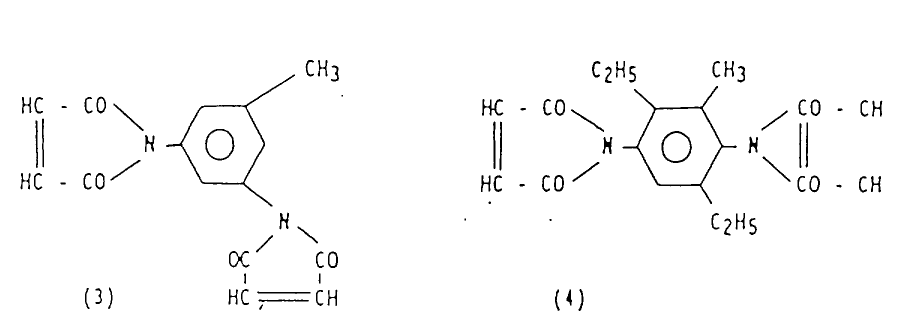 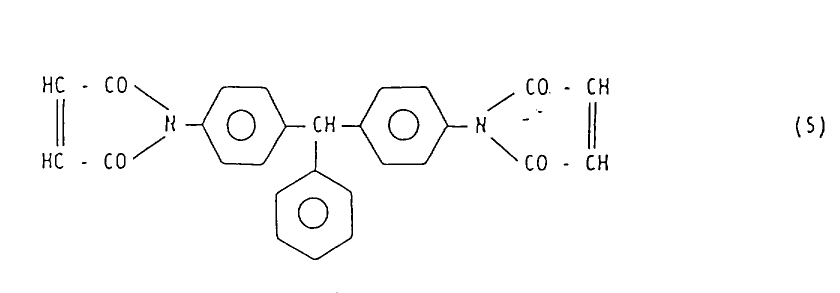 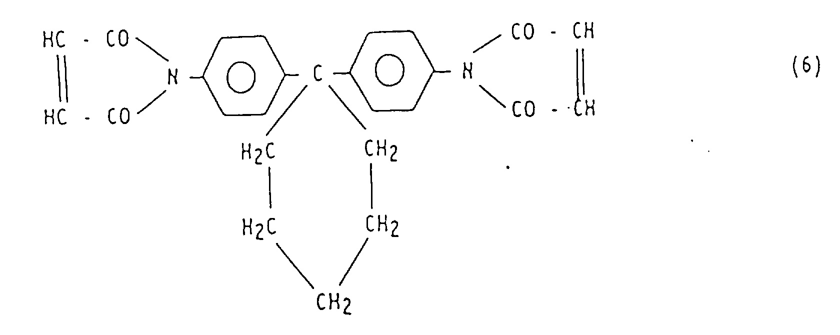 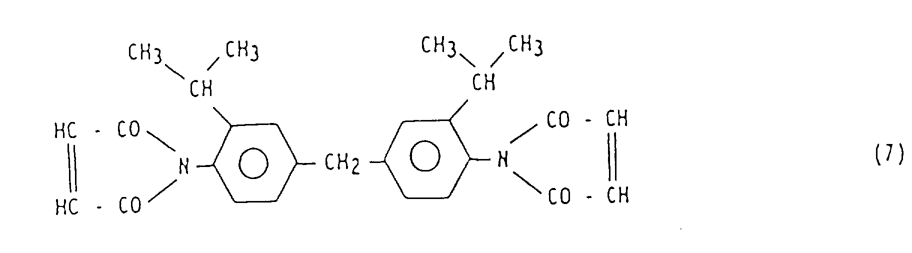 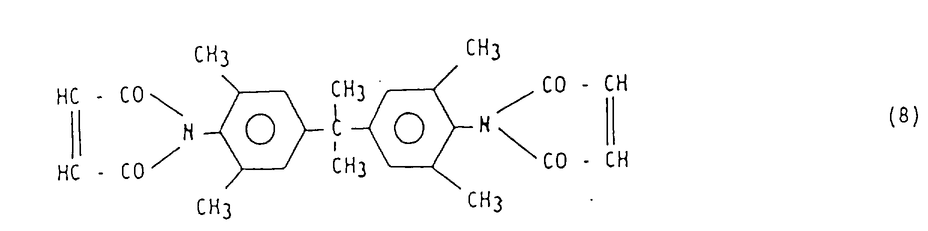 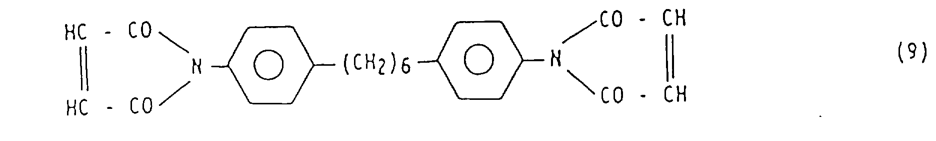 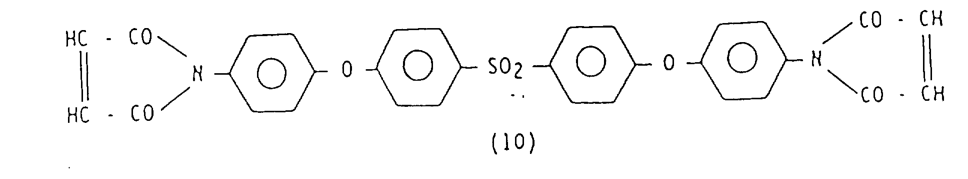 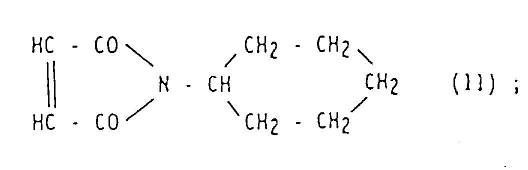
- (c) is an acrylate reagent consisting of one or more compounds of general formula:
(CH₂=CR₁-CO-O)̵ₙG (II)
in which:
- the symbol R₁ represents a hydrogen atom or a methyl radical:
- n represents a whole number or fraction at least equal to I and at the most equal to 8;
- the symbol G represents an organic radical of divalency n derived : a straight or branched, saturated aliphatic radical having 1 to 30 carbon atoms and which can contain one or more oxygen bridges and/or one or more three hydroxyl functions; an aromatic radical (of the aryl or arylaliphatic type) having 6 to 150 carbon atoms constituted by a benzene nucleus and which can be substituted by 1 to 3 alkyl radicals having 1 to 5 carbon atoms or by several benzene nuclei, optionally substituted in the manner indicated hereinbefore, interconnected by a single valency bond, an inert group or an alkylene radical having 1 to 3 carbon atoms, whereby said aromatic radical can contain at various locations of its structure one or more oxygen bridges and/or one or more free hydroxyl functions, the free valency or valencies of the aromatic radical G can be carried by a carbon atom of an aliphatic chain and/or by a carbon atom of a benzene nucleus;
- (d) is a reagent having a double vinyl bond chosen from among vinyl pyridines, N-vinyl-2-pyrrolidone, vinyl tetrahydrofuran, styrene and mixtures thereof.

8. Process according to any one of the claims 1 to 7, characterized in that the bis-maleimide (a) is N,N'-4,4'-diphenyl methane-bis-maleimide.

9. Process according to any one of the claims 1 to 8, characterized in that the irradiation dose is chosen from within the range 250 to 350 kGy.

10. Process according to any one of the claims 1 to 9, characterized in that several successive irradiations are performed until the desired irradiation dose is obtained.

11. Process according to claim 10, characterized in that the irradiation dose at each irradiation is approximately 50 kGy.

12. Process according to anyone of the claims 1 to 11, characterized in that the mixture undergoes a X or electron bombardment.

13. Process according to any one of the claims 2 to 12, characterized in that the material undergoes afterbaking at 180 to 300°C and under atmospheric pressure for 30 minutes to 8 hours.

14. Use of at least one monomer having a vinyl termination as the reactive diluent B for the hardening under ionizing radiation of a basic maleic resin A having at least one bis-maleimide monomer (a), said at least one monomer being used at a rate of 10 to 50 parts by weight for 100 parts by weight of the basic resin A.

15. Use according to claim 14, characterized in that the monomer having a vinyl termination is chosen from among divinyl benzene, butyl vinyl ether, N-vinyl-2-pyrrolidone, trimethylol propane triacrylate, trimethylol propane trimethacrylate, triallyl cyanurate, vinyl anisoles, vinyl pyridines, styrene, alkyl styrenes and mixtures thereof.

16. Use according to claim 14 or 15, characterized in that the vinyl monomer is N-vinyl-2-pyrrolidone.

17. Use according to any one of the claims 14 to 16, characterized in that the vinyl monomer is used at a rate of 20 to 40 parts by weight for 100 parts by weight of the basic resin A.
